Europäisches Patentamt

European Patent Office

Office européen des brevets

(11) Numéro de publication : **0 380 403 B1**

(12) **FASCICULE DE BREVET EUROPEEN**

(45) Date de publication du fascicule du brevet :
**17.06.92 Bulletin 92/25**

(51) Int. Cl.$^5$ : **F16C 11/06**

(21) Numéro de dépôt : **90400178.1**

(22) Date de dépôt : **23.01.90**

(54) **Articulation élastique à limitation d'excentrage.**

(30) Priorité : **24.01.89 FR 8900808**

(43) Date de publication de la demande :
**01.08.90 Bulletin 90/31**

(45) Mention de la délivrance du brevet :
**17.06.92 Bulletin 92/25**

(84) Etats contractants désignés :
**AT BE CH DE ES FR GB GR IT LI LU NL SE**

(56) Documents cités :
**EP-A- 0 148 073**
**DE-A- 2 031 374**

(56) Documents cités :
**DE-A- 2 264 236**
**DE-A- 3 536 283**
**FR-A- 2 170 608**
**GB-A- 1 517 901**
**GB-A- 2 112 056**
**US-A- 3 249 375**
**US-A- 3 398 700**

(73) Titulaire : **CAOUTCHOUC MANUFACTURE ET PLASTIQUES SOCIETE ANONYME**
**143 bis, rue Yves Le Coz**
**F-78000 Versailles (FR)**

(72) Inventeur : **Bourgeot, Jacques**
**20, rue des Tilleuls**
**F-95150 Taverny (FR)**

EP 0 380 403 B1

Jouve, 18, rue Saint-Denis, 75001 PARIS

## Description

L'invention est du domaine des articulations élastiques faisant appel à la liaison caoutchouc métal entre deux éléments rigides à débattement angulaire dans tous les plans autour d'un point, lorsque l'excentrage élastique entre ces deux solides doit être limité.

On connait diverses techniques d'articulation sphérique autour d'un point, la réalisation matérielle la plus simple étant représentée par une rotule métallique à tête sphérique et pied de fixation - le plus souvent conique - sur un support par l'intermédiaire d'un dispositif à vis. La cuvette qui reçoit la rotule peut être métallique, en deux parties, l'une hémisphérique, l'autre en couronne autour du pied de la rotule, un ressort ou des rondelles coniques du type Belleville assurant une précontrainte élastique. C'est la technique proposée par Lemforder Metal dont le dernier perfectionnement est décrit dans le brevet DE-A-3 536 283.

Une cuvette monobloc, en matériau plastique, assure la même fonction dans les brevets US-A-3 249 375 de TRW, ou DE-A-2 031 374 de TRW INC ou FR-A-2 170 608 de TOKAI TRW, apportant un un certain filtrage antivibratoire, par la nature du matériau polyéthylène ou polypropylène, permettant en particulier une précontrainte omnidirectionnelle. Le brevet GB-A-1 517 901 d'EHRENREICH décrit également un procédé de réalisation de ce type de rotule, par estampage direct du boîtier autour de la cuvette plastique.

La liaison adhérisée caoutchouc-métal apporte, depuis longtemps, une amélioration à la rotule sphérique, en supprimant tout contact métal sur métal ainsi que la transmission des vibrations et la nécessité de graissage ; le prospectus 121/1 de 1972, de KLEBER, utilisant une licence de METALASTIK, sur les rotules sphériques "Sphérilastik", en développe l'argumentation des avantages de ce type de construction. En effet, l'emmanchement, dans un alésage, de la bague extérieure - fabriquée en trois secteurs-provoque une précontrainte radiale qui s'exerce au sein du caoutchouc, par le rapprochement des faces sphériques creuses assurant la liaison entre le caoutchouc et le métal de la bague.

Il résulte de ladite précontrainte une tenue améliorée à la fatigue alternée, mais aussi une rigidité de liaison élastique entre les deux solides qui n'est limitée que par la détérioration du caoutchouc ou bien par un contact métal sur métal, entre l'ouverture et l'axe de fixation, ce qui a comme conséquence une course de butée variable avec la position angulaire.

D'autres techniques de précontrainte de la liaison adhérisée caoutchouc-métal peuvent être utilisées sur des rotules par un rapprochement axial des éléments rigides. Le brevet EP-B-0148073 de la demanderesse décrit un joint d'étanchéité pour canalisations à pression élevée, utilisant une technique de rotule à élastomère précontrainte par une déformation géométrique axiale, qui peut être utilisé comme rotule d'articulation sphérique. Dans cet usage, la liaison mécanique entre les deux solides se faisant face à travers une rotule sphérique en élastomère fretté, a lieu par déformation élastique, à rigidité sensiblement constante sur une course notable d'excentrage entre les faces sphériques en regard, par exemple du quart de l'épaisseur de la couche élastique avant une dégradation de la fonction assurée, soit par décollement entre le caoutchouc et le métal, soit par éclatement de matière.

Il est des cas où cette élasticité - et le déplacement correspondant - s'avèrent être un inconvénient rédhibitoire. Si une butée, même non progressive, est exigée par l'utilisateur, et, si elle doit être extérieure à la rotule élastique, le dispositif nécessite un encombrement considérable afin que les faces rigides, capables d'entrer en contact après une faible course, demeurent en regard, quelle que soit l'orientation de la rotule. Il est facilement concevable que ceci n'est possible que pour des surfaces sphériques concentriques aux faces de la rotule d'élastomère, qui doivent être ajustées avec soin sur leurs supports dont les tolérances de fabrication vont "s'empiler".

L'analyse de l'art antérieur montre, à l'évidence, qu'une rotule d'articulation élastique présentant une possibilité de limiter l'excentrage élastique tout en asurant la filtration des vibrations par la liaison adhérisée caoutchouc-métal, sous faible encombrement, n'est pas connue.

L'invention concerne donc un dispositif permettant d'intégrer à l'intérieur de la rotule la fonction butée, limitant l'excentrage élastique sans toutefois porter préjudice au débattement fonctionnel.

L'invention consiste en une rotule d'articulation élastique, entre deux éléments rigides à débattement sphérique, et comprenant des couches d'élastomère frettées par adhérisation entre des demi-rotules internes et des calottes sphériques extérieures solidaires respectivement des deux éléments rigides, lesdites couches d'élastomère étant précontraintes par rapprochement axial des calottes sphériques extérieures au moyen d'un tube d'assemblage les portant.

L'invention est caractérisée en ce que l'excentrage dû à la déformation élastique sous contrainte des couches sphériques d'élastomère dans le plan diamétral de symétrie des demi-rotules internes est limité mécaniquement par l'entrée en contact dans ledit plan diamétral d'une bague à faible jeu, rendue solidaire des demi-rotules internes qu'elle sépare, sur une surface annulaire rigide solidaire des calottes sphériques extérieures.

Les caractéristiques de l'invention seront mieux comprises à la lecture de la description accompagnant les dessins dans lesquels :
   – La figure 1 est une demi-vue latérale/demi-coupe axiale d'une   application ferroviaire qui nécessite l'emploi de rotules élastiques suivant l'invention.

– La figure 2 représente une coupe axiale d'une rotule selon l'invention.

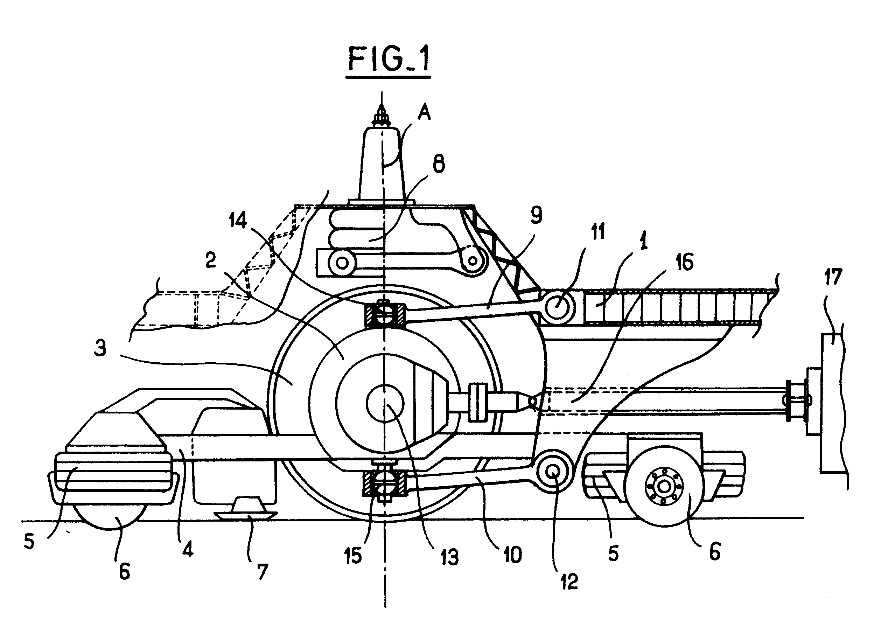

La figure 1 est une demi-vue latérale demi-coupe axiale d'une application ferroviaire qui nécessite l'usage de rotules élastiques suivant l'invention.

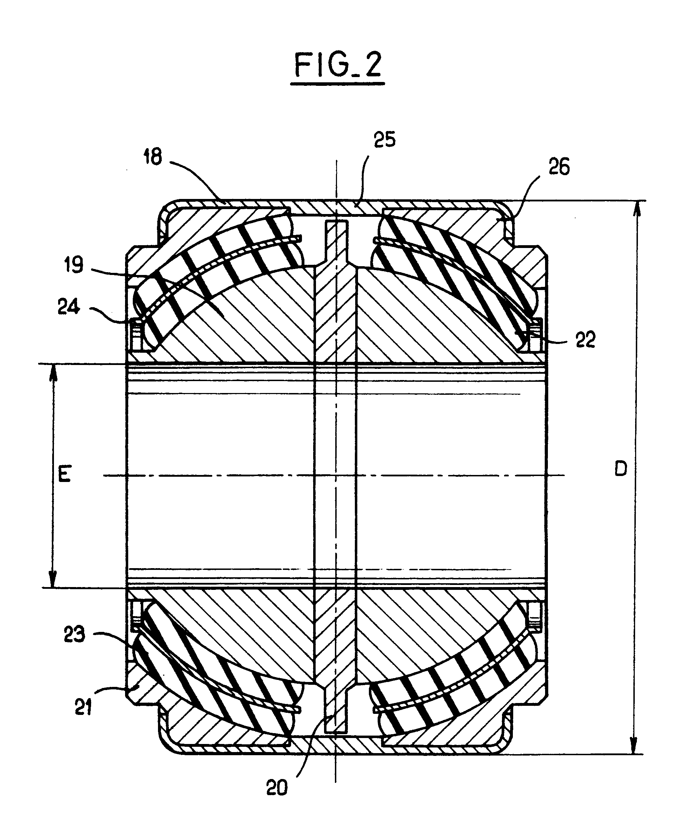

La suspension d'une caisse de véhicule (1) est assurée par un essieu unique (2) à chacune des extrêmités dudit véhicule, monté sur des pneumatiques (3) et guidé dans ses rotations autour d'un axe vertical (A) par un chassis formant bogie (4), équipé de quatre pneumatiques horizontaux (5), roulant sur les rails de guidage latéraux, et, pour les changements de voie, de deux galets d'aiguillage (6). Des frotteurs de prise de courant (7) ainsi que d'autres équipements accroissent encore l'inertie de rotation du chassis formant bogie (4) autour de l'essieu. Les débattements élastiques de la caisse du véhicule par rapport à ce chassis (4) sont équilibrés par la suspension (8) de chaque côté de la caisse de véhicule (1) et guidés par un parallélogramme unique, formé dans le plan axial du véhicule par une bielle supérieure (9) et une bielle de traction basse (10). Lesdites bielles supérieure (9) et de traction basse (10) oscillent au cours des débattements verticaux de suspension comme dans les débattements élastiques transversaux, sur deux rotules, l'une (11) placée à l'extrémité de la bielle supérieure (9), l'autre (12) placée à l'extrémité de la bielle de traction basse (10), à débattement sphérique, fixées à la caisse de véhicule (1). L'autre extrêmité desdites bielles est fixée au centre du pont (13) de l'essieu (2) par une rotule supérieure (14) et une rotule de traction basse (15), toutes deux situées sur l'axe vertical (A) de l'essieu (2). Le couple moteur, aussi bien que le couple de freinage, sollicitent élastiquement les quatre rotules (11) (12) (14) (15), formant le parallélogramme de guidage. L'élasticité radiale des quatre rotules (11) (12) (14) (15) provoque un braquage du chassis formant bogie (4), sans inconvénient pour la transmission de l'effort moteur venu par la transmission à cardans (16) depuis le moteur (17) fixé à la caisse du véhicule (1) Une déviation angulaire "par cabrage" du chassis formant bogie (4) s'est avérée inacceptable à l'usage, par les changements d'altitude des pneumatiques horizontaux (5), vis-à-vis des rails de guidage, et, surtout, des galets d'aiguillage (6) qui dépassaient dans les débattements dynamiques dus à l'élasticité radiale des quatre rotules, toutes les tolérances admises, du fait de la grande inertie des masses pivotant autour de l'axe horizontal d'essieu représenté dans la coupe par le centre du pont (13). La recherche de solution a abouti à la limitation géométrique de l'excentrage élastique des quatres rotules (11) (12) (14) ou (15) sous l'effet du couple moteur-frein, mais, surtout de ses dépassements dynamiques éventuels. La figure 2 représente une coupe axiale de l'une des quatre rotules (11) (12) (14) ou (15) qui ne diffèrent que par leurs dimensions.

La pièce est représentée à l'état de livraison, avant l'emmanchement à force dans l'alésage à chaque extrémité d'une bielle supérieure (9) ou de traction basse (10), par le diamètre extérieur (D) de son tube d'assemblage (18). Cet état précède également l'assemblage de l'une desdites bielles déjà équipée de ses rotules, qui se fixent sur la caisse de véhicule (1) ou sur l'essieu (2), au moyen d'un boulon en porte-à-faux ou en chape, engagé par l'alésage (E), et serrant axialement les deux demi-rotules internes (19). Entre ces deux dernières est interposée une bague à faible jeu (20), centrée lors de l'assemblage par l'alésage commun (E), donc en appui simple sur deux plans de contact.

En effet, un effort axial de précontrainte enserre ladite bague à faible jeu (20) entre les deux demi-rotules internes (19). Ledit effort axial est exercé du fait du rapprochement géométrique, lors de l'assemblage des deux calottes sphériques extérieures (21) qui sont centrées par le tube d'assemblage (18).

Dans la variante représentée, chaque demi-rotule interne (19) est adhérisée, lors du moulage, avec une couche sphérique d'élastomère interne (22), d'épaisseur constante. De même, chaque calotte sphérique extérieure (21) est adhérisée, lors de ce même moulage, avec une couche sphérique d'élastomère externe (23), d'épaisseur constante.

Les couches sphériques d'élastomère interne (22) et externe (23) sont elles-mêmes adhérisées, lors de ce même moulage, à une armature interne (24), métallique comme les demi-rotules internes (19) et les calottes sphériques extérieures (21). Ladite armature interne (24) assure un frettage, lors de la compression axiale, apportant un facteur de forme favorable pour exercer des contraintes internes dans l'élastomère, de l'ordre de 50 à 100 bars ou même plus, lorsque le nombre d'armatures internes (24) est supérieur à un. Les surfaces sphériques en regard d'une demi-rotule interne (19), d'une calotte sphérique extérieure (21) et, éventuellement d'une (ou plusieurs) armature(s) interne(s) (24) sont disposées décalées axialement, dans le moule de réalisation, de façon que, lors du rapprochement axial d'assemblage, par exemple de 4 millimètres par demi-rotule, les couches sphériques d'élastomère interne (22) et externe (23) se retrouvent à épaisseur constante sous l'effet dudit rapprochement.

Deux demi-rotules, issues d'un tel moulage, sont disposées de part et d'autre d'une bague à faible jeu (20), sur un axe de montage, commun à leur alésage (E).

Les calottes sphériques extérieures (21) viennent, sous l'effort de précontrainte, buter sur un épaulement constitué par une surface annulaire rigide (25), faisant partie du tube d'assemblage (18), le plus généralement métallique.

Un sertissage de révolution de celui-ci par-dessus un épaulement (26) de chaque calotte sphérique extérieure (21) rend solidaires tous les composants de la rotule.

Le montage ainsi réalisé présente donc une rigidité de rotation autour de l'axe commun au diamètre extérieur (D) et à l'alésage (E) et une rotation de basculement, dite conique, comme les dispositifs antérieurement connus. Il en diffère par une caractéristique supplémentaire, qui porte sur la rigidité d'excentrage. La rigidité de rotation, autour de l'axe commun au diamètre extérieur (D) et à l'alésage (E), (en l'absence d'efforts de basculement) est nettement abaissée par l'existence de la précontrainte, dont le rôle essentiel est, cependant, d'améliorer la tenue aux fatigues alternées. Cette première rotation permet, en particulier, la rotation de l'essieu (2), par pivotement des rotules (15) et (16) situées sur l'axe vertical (A), tel que représenté en figure 1.

L'ordre de grandeur de cette fatigue alternée, dans l'exemple cité, est un pivotement de 8 degrés, tandis que la sollicitation, due au débattement latéral sur les rotules (11) et (12), est angulairement beaucoup plus faible, mais bien plus fréquente.

La rotation conique, (qui correspond au basculement dans le plan de la figure 2) est une conséquence des débattements verticaux de suspension, les axes du diamètre extérieur (D) et de l'alésage (E) étant disposés de façon sensiblement verticale. Dans cette sollicitation, les débattements angulaires sont très limités, à l'exception du fonctionnement en butée de secours des suspensions pneumatiques (8), mais il est exigé que les rigidités soient les plus basses possibles. La valeur en est plus basse que pour le pivotement autour de l'axe commun au diamètre extérieur (D) et à l'alésage (E). En effet, la couche d'élastomère est une sphère incomplète, dans ce sens, et comprend des parois latérales libres aux extrêmités des couches sphériques d'élastomère interne (22) et externe (23).

Dans les deux types de déformations, les rigidités desdites couches étant en série, il est avantageux qu'elles soient de valeur à peu près égale et, la section étant légèrement différente, les épaisseurs des deux couches peuvent légèrement différer.

La rigidité d'excentrage entre deux solides reliés élastiquement, matérialisée par l'excentrage entre le diamètre extérieur (D) et l'alésage (E), peut être très élevée grâce au frettage des couches d'élastomère assuré par les armatures internes (24). Il a été choisi que le débattement, mécaniquement limité par l'entrée en contact entre la bague à faible jeu (20) et la surface annulaire rigide (25) qui l'entoure, corresponde approximativement aux sollicitations limites dues au couple moteur ou de freinage. Ce jeu, de l'ordre de 0,75 à 0,8 millimètres dans l'exemple représenté, s'annule donc lors du contact et ceci limite le "cabrage" du chassis formant bogie (4) à un angle de quelques degrés. Mais ledit jeu ne doit pas empêcher les débattements verticaux de suspension (et ceux dus au roulis) qui se traduisent par des rotations angulaires entre le diamètre extérieur (D) et l'alésage (E). Il en résulte que les surfaces en regard de la bague à faible jeu (20) et de la surface annulaire rigide (25) présentent un déplacement angulaire relatif et devraient, en toute rigueur, être sphériques et concentriques.

En pratique, le contact étant occasionnel, un simple usinage cylindrique suffit. En effet, la longueur de palier formée, par la surface annulaire rigide (25), doit laisser libre tout le débattement de la bague à faible jeu (20)dû à la suspension. Ladite suspension doit pouvoir fonctionner aussi, en butée de secours, dans la position affaissée sur les butées. Dans ce cas, la bague à faible jeu (20) viendrait en oblique de quelques degrés dans l'alésage de la surface annulaire rigide (25).

Le jeu fonctionnel peut être identifié, sur chaque rotule unitaire, car il se traduit par un changement brusque de pente, lors de la mesure de rigidité d'excentrage entre le diamètre extérieur (D) et l'alésage (E) (un axe rigide est alors nécessaire pour éviter un glissement de la bague à faible jeu (20) sur les demi-rotules internes (19) qui l'enserrent).

La valeur de l'effort élastique à partir de laquelle intervient la butée mécanique, n'a pas besoin d'être trop précise, car le blocage du parallélogramme formé par les quatre rotules (11) (12) (14) (15), tournant autour du pont (13), se fait à la suite de quatre contacts métalliques successifs. La dispersion des valeurs limites de la zone élastique assure avantageusement la progressivité de ce blocage. Un choc pourrait, en effet, être ressenti par les voyageurs si, par hasard, les quatre limitations opéraient simultanément. La précision dans les rigidités ne serait pas, ici, un avantage, seules des valeurs limites géométriques sont à donner au "cabrage" du chassis formant bogie (4). Les excentrages entre la bague à faible jeu (20) et son alésaae (E) et entre la surface annulaire rigide (25) et son diamètre extérieur (D), pouvant résulter de l'usinage, n'auront pas de conséquence sur la géométrie du parallèlogramme qui peut être assurée par un réglage de position au montage, - soit par boutonnière, soit par excentrique. Les coûts d'usinage peuvent être ainsi plus faibles que pour toute autre disposition extérieure de butée dont les valeurs d'excentrage se cumulent. En outre, cette fonction butée est totalement enfermée à l'abri de toute pollution et des risques d'oxydation. Le fretting-corrosion, même en l'absence de courants électriques, est évité par le caractère exceptionnel du contact décrit précédemment.

Ainsi, dans cette application et dans toute application similaire que l'homme de l'art pourrait proposer, tel qu'un parallélogramme déformable ou un "trois barres de Watt", composé de quatre rotules élastiques, nécessitant une limitation géométrique de leur excentrage, l'invention apporte une pièce finie et contrôlée immédiatement utilisable.

Les caractéristiques mécaniques peuvent, en effet, être définies par le fabricant de la rotule, grâce à un cahier des charges fonctionnel, ce qui est rarement le cas dans des assemblages de plusieurs pièces, tels qu'antérieurement utilisés, dont les tolérances de fabrication s'empilent.

La mise en place du dispositif objet de l'invention fait appel à des techniques d'assemblage tout à fait classiques. Les pièces présentant l'apparence des rotules de l'art antérieur, offrent une interchangeabilité totale, en apportant, en outre, la fonction limitatrice du "cabrage" du chassis.

L'homme de l'art peut, bien entendu, apporter à la rotule d'articulation élastique à limitation d'excentrage, objet de l'invention, diverses modifications, telles que l'adjonction d'armatures intermédiaires, sans sortir du cadre de l'invention.

## Revendications

1. Rotule d'articulation élastique, entre deux éléments rigides à débattement sphérique, et comprenant des couches d'élastomère (22,23) frettées par adhérisation entre des demi-rotules internes (19) et des calottes sphériques extérieures (21) solidaires respectivement des deux éléments rigides, lesdites couches d'élastomère étant précontraintes par rapprochement axial des calottes sphériques extérieures (21) au moyen d'un tube d'assemblage (18) les portant, caractérisée en ce que l'excentrage dû à la déformation élastique sous contrainte des couches sphériques d'élastomère (22,23) dans le plan diamétral de symétrie des demi-rotules internes (19) est limité mécaniquement par l'entrée en contact dans ledit plan diamétral d'une bague à faible jeu (20), rendue solidaire des demi-rotules internes (19) qu'elle sépare, sur une surface annulaire rigide (25) solidaire des calottes sphériques extérieures (21).

2. Rotule d'articulation élastique selon la revendication 1, caractérisie en ce que les couches sphériques d'élastomère interne (22) et externe (23), adhérisées aux demi-rotules internes (19) et aux calottes sphériques extérieures (21), ont leurs rigidités accrues par adhérisation à au moins une armature interne (24), le facteur de forme ainsi obtenu permettant que la limitation géométrique de l'excentrage n'intervienne que pour des efforts supérieurs ou au plus égaux aux sollicitations permanentes exercées en service sur chaque rotule.

3. Rotule d'articulation élastique selon l'une des revendications 1 ou 2, caractérisée en ce que le débattement, mécaniquement limité par l'entrée en contact entre la bague à faible jeu (20) et la surface annulaire (25) correspond, approximativement, aux sollicitations limites dues au couple moteur ou de freinage.

4. Rotule d'articulation élastique selon l'une des revendications 1 à 3, caractérisée en ce que la bague à faible jeu (20) est insérée par appui simple sur des plans de contact entre les demi-rotules internes (19) et est centrée uniquement par son diamètre interne sur un axe d'assemblage qui assure la solidarisation avec lesdites demi-rotules internes (19).

## Patentansprüche

1. Elastisches Kugelgelenk zwischen zwei starren Elementen mit sphärischem Federungsspiel, bei dem Elastomerschichten (22,23) mittels Haftverbindung zwischen jeweils mit den beiden starren Elementen verbundenen inneren Halbkugeln (19) und sphärischen äußeren Kalotten (21) eingefügt sind, wobei die Elastomerschichten durch axiale Annäherung der sphärischen äußeren Kalotten (21) mittels eines diese tragenden Haltekäfigs (18) unter Vorspannung gesetzt sind, **dadurch gekennzeichnet**, daß das durch die elastische Verformung der sphärischen Elastomerschichten (22,23) bei deren Belastung in der diametralen Symmetrieebene der inneren Halbkugeln (19) hervorgerufene Exzentrieren durch in der diametralen Symmetrieebene erfolgendes Inkontaktkommen eines ein geringes Spiel aufweisenden Ringes (20), der mit den von ihm getrennten inneren Halbkugeln (19) verbunden ist, an einer mit den sphärischen äußeren Kalotten (21) verbundenen starren ringförmigen Fläche (25) mechanisch begrenzt ist.

2. Elastisches Kugelgelenk nach Anspruch 1, **dadurch gekennzeichnet**, daß die mit den inneren Halbkugeln (19) und den sphärischen äußeren Kalotten (21) verbundenen inneren (22) und äußeren (23) sphärischen Elastomerschichten durch eine Haftverbindung mit mindestens einer inneren Armierung (24) eine vergrößerte Starrheit aufweisen, wobei es die so erhaltene Formfestigkeit zuläßt, daß die geometrische Begrenzung des Exzentrierens nur bei Kräften eintritt, die größer oder höchstens gleich den beim Betrieb auf jede Kugel einwirkenden andauernden Beanspruchungen sind.

3. Elastisches Kugelgelenk nach einem der Ansprüche 1 oder 2, **dadurch gekennzeichnet**, daß das Federungsspiel, das durch das Inkontaktkommen zwischen dem Ring (20) mit geringem Spiel und der ringförmigen Oberfläche (25) mechanisch begrerizt ist;, ungefähr den in vorgeschriebener Weise begrenzten Antriebs- oder Brems-Drehmomenten entspricht.

4. Elastisches Kugelgelenk nach einem der Ansprüche 1 bis 3, **dadurch gekennzeichnet**, daß der das geringe Spiel aufweisende Ring (20) durch einfaches Abstützen gegen Kontaktebenen zwischen den inneren Halbkugeln (19) eingesetzt und nur durch seinen inneren Durchmesser auf einer die Verbindung mit den inneren Halbkugeln (19) sicherstellenden Montageachse zentriert ist.

## Claims

1. Elastic articulation joint between two rigid components with a spherical clearance, comprising layers of elastomer (22, 23) joined by adhesion between inner half-joints (19) and outer spherical caps (21) rigid respectively with the two rigid components, these layers of elastomer being prestressed by axial closing up of the outer spherical caps (21) by means of an assembly tube (18) bearing them, characterized in that the displacement due to the elastic deformation under stress of the spherical elastomer layers (22, 23) in the diametrical plane of symmetry of the inner half-joints (19) is limited mechanically by the entry into contact, in this diametrical plane, of a ring with a small clearance (20) made rigid with the inner half-joints (19) which it separates with a rigid annular surface (25) rigid with the outer spherical caps (21).

2. Elastic articulation joint as claimed in claim 1, characterized in that the inner (22) and outer (13) spherical layers of elastomer attached by adhesion to the inner half-joints (19) and to the outer spherical caps (21) have their rigidity reinforced by adhesion to at least one inner armature (24), the shaping factor thus obtained enabling the geometrical limitation of the displacement to take place only for forces greater than or at most equal to the permanent stresses exerted on each joint during operation.

3. Elastic articulation joint as claimed in one of claims 1 or 2, characterized in that the clearance, mechanically limited by the entry into contact of the ring with a small clearance (10) and the annular surface (25), corresponds approximately to the limit stresses due to the engine or braking torque.

4. Elastic articulation joint as claimed in one of claims 1 to 3, characterized in that the ring with a small clearance (20) is inserted and simply supported on contact planes between the inner half-joints (19) and is centred solely via its inner diameter on an assembly axis which ensures that it is made rigid with the inner half-joints (19).

# FIG.1

## FIG_2